# EUROPÄISCHE PATENTSCHRIFT

(11) **EP 1 706 712 B1**
(45) Veröffentlichungstag und Bekanntmachung des Hinweises auf die Patenterteilung: **06.09.2017**
(21) Anmeldenummer: 05777998.5
(22) Anmeldetag: 05.08.2005
(51) Int. Cl.: G01F 23/36, G01F 23/38, G01F 23/32

(54) **FÜLLSTANDSSENSOR**
LEVEL SENSOR
CAPTEUR DE NIVEAU

(30) Priorität: 09.09.2004 DE 4043717
(43) Veröffentlichungstag der Anmeldung: 04.10.2006
(73) Patentinhaber: Continental Automotive GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2005/053866
(87) Internationale Veröffentlichungsnummer: WO 2006/027302

(56) Entgegenhaltungen:
- EP-A- 0 932 031
- US-A- 5 007 450
- US-A- 5 522 415
- US-A- 6 089 086

## Beschreibung

Die Erfindung betrifft einen Füllstandssensor zur Erfassung eines Füllstandes an Kraftstoff in einem Kraftstoffbehälter eines Kraftfahrzeuges mit einem einen Schwimmer halternden, dem Füllstand an Kraftstoff folgenden Hebelarm mit einem zur Montage in dem Kraftstoffbehälter vorgesehenen Träger und mit einer Lagerung des Hebelarms auf dem Träger.

Solche Füllstandssensoren weisen meist einen auf dem Träger angeordneten Potentiometer oder einen magnetisch passiven Positionssensor zur Erfassung der Auslenkung des Hebelarms auf und sind aus der Praxis bekannt. Bei heutigen, in der Regel sehr flachen und langen Kraftstoffbehältern ist der Hebelarm ebenfalls sehr lang. Zur Montage wird der Füllstandssensor mit dem Schwimmer voran durch eine sehr klein gehaltene Montageöffnung in den Kraftstoffbehälter eingeführt. Anschließend wird der Träger in dem Kraftstoffbehälter befestigt. Hierbei ist es erforderlich, dass der Füllstandssensor ausreichend vorsichtig durch die Montageöffnung in den Kraftstoffbehälter eingefädelt wird, da insbesondere der Hebelarm beschädigt werden kann. Weiterhin muss der Hebelarm beim Einführen des Füllstandssensors in den Kraftstoffbehälter verschwenkt werden, um ein Anstoßen des Schwimmers an einer Wandung des Kraftstoffbehälters zu verhindern.

Aus der US 5 007 450 A ist ein Füllstandssensor bekannt geworden, bei dem ein den Schwimmer halternder Hebelarm an einem zylindrischen Träger gelagert ist. Zur Montage des Füllstandssensors durch eine zylindrische Montageöffnung muss zunächst der Hebelarm von Hand ausgelenkt und durch die Montageöffnung geführt werden. Anschließend wird der Träger in die Montageöffnung eingesetzt.

Der Erfindung liegt das Problem zugrunde, einen Füllstandssensor der eingangs genannten Art so weiterzubilden, dass er eine besonders einfache Montage in dem Kraftstoffbehälter ermöglicht.

Dieses Problem wird erfindungsgemäß dadurch gelöst, dass der Hebelarm ein den Träger seitlich überragendes Führungsteil mit einer an seiner dem Träger abgewandten Seite eine Führungskurve aufweisenden Kontur hat, so dass der Hebelarm durch das Führungsteil auslenkbar ist, wenn das Führungsteil gegen eine Begrenzung einer Montageöffnung des Kraftstoffbehälters gelangt.

Durch diese Gestaltung lässt sich der Hebelarm durch das Führungsteil auslenken, wenn die Führungskurve gegen den Rand der Montageöffnung gedrückt wird. Durch die Kontur der Führungskurve lässt sich festlegen, um welchen Winkel der Hebelarm in Abhängigkeit von der Position des erfindungsgemäßen Füllstandssensors gegenüber dem Kraftstoffbehälter ausgelenkt wird. Daher ist kein Auslenken des Hebelarms von Hand beim Einführen des erfindungsgemäßen Füllstandssensors in den Kraftstoffbehälter erforderlich. Der erfindungsgemäße Füllstandssensor ermöglicht daher eine besonders einfache Montage in den Kraftstoffbehälter. Die Kontur der Führungskurve lässt sich in Abhängigkeit von der Form und Länge des Hebelarms und des Kraftstoffbehälters einfach festlegen.

Bei gleichförmigen Kraftstoffbehältern und Hebelarmen gestaltet sich das Führungsteil gemäß einer vorteilhaften Weiterbildung der Erfindung konstruktiv besonders einfach, wenn es einen bogenförmigen, von dem Träger weg weisenden Rand hat.

Eine besonders zuverlässige Führung des Hebelarms lässt sich erreichen, wenn der Füllstandssensor auf einer Seite mit einem Rand des Trägers und auf der anderen Seite mit der Führungskurve des Führungsteils an dem Rand der Montageöffnung entlang gleitet. Hierdurch lässt sich der erfindungsgemäße Füllstandssensor gerade in den Kraftstoffbehälter einführen. Dabei wird der Hebelarm automatisch in die vorgesehene Position verschwenkt. Eine solche automatische Verschwenkung des Hebelarms lässt sich gemäß einer anderen vorteilhaften Weiterbildung der Erfindung einfach erreichen, wenn der Träger an seiner dem Führungsteil des Hebelarms abgewandten Seite einen Rand mit einer glatten Kontur aufweist.

Vorhandene Füllstandssensoren lassen sich gemäß einer anderen vorteilhaften Weiterbildung der Erfindung einfach umrüsten, wenn das Führungsteil eine Rastverbindung an dem Hebelarm hat.

Der erfindungsgemäße Füllstandssensor lässt sich besonders kostengünstig fertigen, wenn das Führungsteil einstückig mit dem Hebelarm gefertigt ist.

In der Regel weist der Hebelarm einen an einem Kunststoffbügel befestigten Hebeldraht auf, wobei der Hebeldraht den Schwimmer hält. Der Kunststoffbügel hat Rastelemente zur Verbindung mit dem Hebeldraht. Die Rastelemente sind bei den bekannten Füllstandssensoren häufig der Gefahr einer Beschädigung ausgesetzt, wenn sie bei der Montage des Füllstandssensors im Kraftstoffbehälter gegen den Rand der Montageöffnung gelangen. Zur weiteren Verringerung der Gefahr einer Beschädigung einzelner Bauteile des erfindungsgemäßen Füllstandssensors trägt es jedoch bei, wenn der Hebelarm einen an dem Träger gelagerten Kunststoffbügel und einen mit dem Kunststoffbügel verbundenen, den Schwimmer halternden Hebeldraht aufweist und wenn das Führungsteil an dem Kunststoffbügel angeordnet ist.

Zur weiteren Vereinfachung der Montage des erfindungsgemäßen Füllstandssensors im Kraftstoffbehälter trägt es bei, wenn der Träger oder ein mit dem Träger fest verbundenes Bauteil im Wesentlichen die Breite einer Montageöffnung des Kraftstoffbehälters hat. Damit wird der erfindungsgemäße Füllstandssensor beim Einführen in den Kraftstoffbehälter durch den Träger oder den mit dem Träger verbundenen Bauteil und dem Rand der Montageöffnung geführt. Da das Führungsteil den Träger jedoch überragt, wird der Hebelarm beim Einführen des Füllstandssensors in den Kraftstoffbehälter ausgelenkt.

Zur weiteren Vereinfachung der Montage des erfindungsgemäßen Füllstandssensors trägt es bei, wenn der Träger an einem zum Verschluss einer Montageöffnung des Kraftstoffbehälters ausgebildeten Montageflansch angeordnet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: einen erfindungsgemäßen Füllstandssensor beim Einführen in einen Kraftstoffbehälter,
- Fig. 2: den erfindungsgemäßen Füllstandssensor aus Figur 1 im nahezu vollständig in den Kraftstoffbehälter eingeführten Zustand,
- Fig. 3: stark vergrößert eine perspektivische Darstellung eines Kunststoffbügels des erfindungsgemäßen Füllstandssensors aus Figur 1.

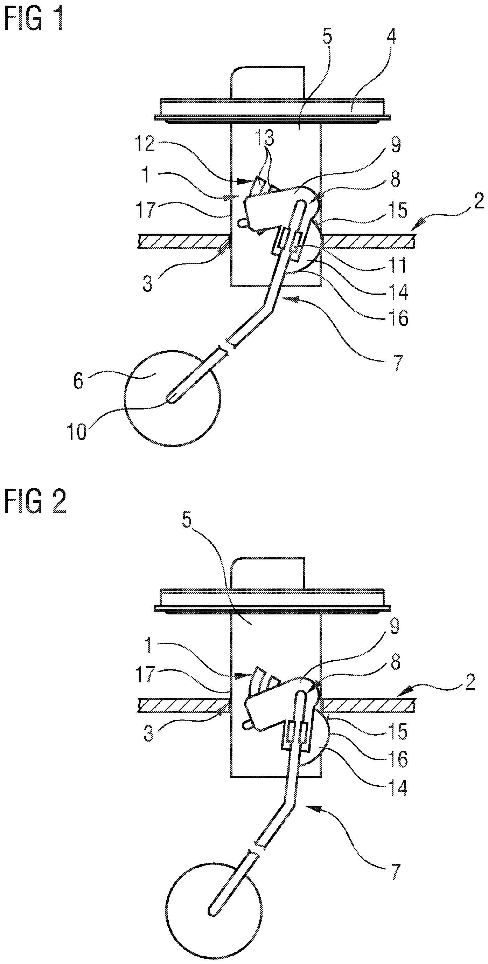

Figur 1 zeigt einen Füllstandssensor 1 während der Montage in einem Kraftstoffbehälter 2. Der Kraftstoffbehälter 2 weist eine Montageöffnung 3 auf. Der Füllstandssensor 1 hat einen an einem Montageflansch 4 befestigten Träger 5. Im montierten Zustand verschließt der Montageflansch 4 die Montageöffnung 3 des Kraftstoffbehälters 2, so dass sich der Füllstandssensor 1 innerhalb des Kraftstoffbehälters 2 befindet. Der Füllstandssensor 1 weist einen einen Schwimmer 6 tragenden Hebelarm 7 auf, welcher über eine Lagerung 8 an dem Träger 5 angelenkt ist. Der Hebelarm 7 hat einen Kunststoffbügel 9, an dem ein mit dem Schwimmer 6 verbundener Hebeldraht 10 über eine Rastverbindung 11 befestigt ist. Die Stellung des Hebelarms 7 wird von einem Potentiometer 12 erfasst. Hierbei kann der Hebelarm 7 beispielsweise eine nicht dargestellte Kontaktbrücke haltern, welche mit auf dem Träger 5 angeordneten Schleifbahnen 13 zusammenwirkt. Alternativ kann die Stellung des Hebelarms 7 auch über einen magnetisch passiven Positionssensor erfasst werden, bei dem der Hebelarm 7 einen Magneten hält und ein Widerstandsnetzwerk mit von dem Magneten auslenkbaren Federzungen an dem Träger 5 angeordnet ist.

Der Kunststoffbügel 9 weist ein den Träger 5 überragendes Führungsteil 14 mit einer Führungskurve 15 auf. Die Führungskurve 15 ist auf einem von dem Träger 5 wegweisenden Rand 16 angeordnet. Auf der dem Führungsteil 14 abgewandten Seite hat der Träger 5 einen Rand 17 mit einer glatten Kontur. Zur Montage des Füllstandssensors 1 in dem Kraftstoffbehälter 2 wird zunächst der Schwimmer 6 durch die Montageöffnung 3 in den Kraftstoffbehälter 2 eingeführt. Beim anschließenden Einführen des Trägers 5 in die Montageöffnung 3 gelangt das Führungsteil 14 gegen die Begrenzung der Montageöffnung 3 und verschwenkt den Hebelarm 7 entsprechend der Kontur der Führungskurve 15. Die Stellung des Hebelarms 7, bei der die Begrenzung der Montageöffnung 3 den Hebelarm 7 auslenkt, ist in Figur 1 dargestellt.

Beim weiteren Einführen des Füllstandssensors 1 gelangt das Führungsteil 14 aus dem Bereich der Montageöffnung 3 heraus, wie es in Figur 2 dargestellt ist. Damit wird eine Behinderung der Bewegung des Hebelarms 7 und damit die Erfassung des Füllstandes an Kraftstoff in dem Kraftstoffbehälter 2 durch das Führungsteil 14 vermieden.

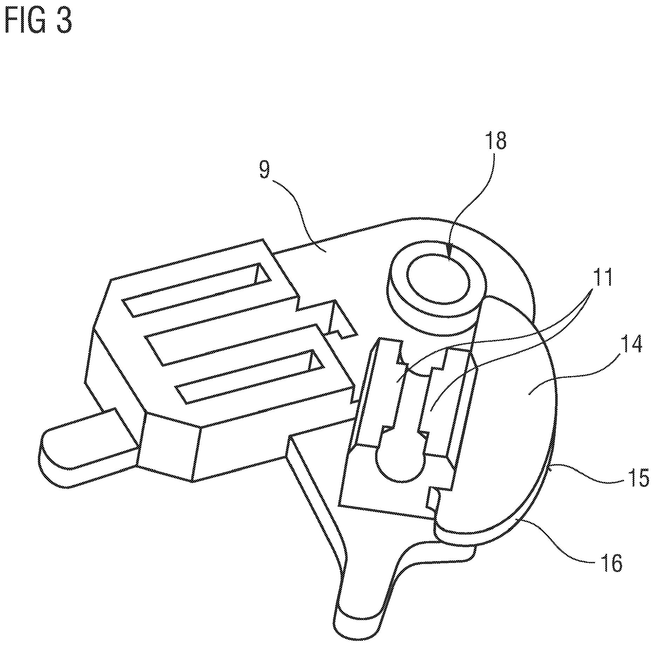

Figur 3 zeigt vergrößert in einer perspektivischen Darstellung den Kunststoffbügel 9 des Füllstandssensors 1 aus Figur 1 mit dem Führungsteil 14. Hierbei ist zu erkennen, dass das Führungsteil 14 einstückig mit dem Kunststoffbügel 9 gefertigt ist. Der Kunststoffbügel 9 hat eine Lagerbohrung 18 der Lagerung 8, durch die ein abgewinkeltes Ende des in Figur 1 dargestellten Hebeldrahtes 10 hindurchgeführt wird und die Lagerachse bildet. Die Rastverbindung 11 zur Halterung des Hebeldrahtes 10 ist ebenfalls einstückig mit dem Kunststoffbügel 9 gefertigt. In einer nicht dargestellten Ausführungsform kann das Führungsteil 14 auch Rasthaken aufweisen und mit dem Kunststoffbügel 9 verrastet sein.

## Patentansprüche

1. Füllstandssensor zur Erfassung eines Füllstandes an Kraftstoff in einem Kraftstoffbehälter eines Kraftfahrzeuges mit einem einen Schwimmer (6) halternden, dem Füllstand an Kraftstoff folgenden Hebelarm (7) mit einem zur Montage in dem Kraftstoffbehälter vorgesehenen Träger (5) und mit einer Lagerung (8) des Hebelarms auf dem Träger, **dadurch gekennzeichnet, dass** der Hebelarm (7) ein den Träger (5) seitlich überragendes Führungsteil (14) mit einer an seiner dem Träger (5) abgewandten Seite eine Führungskurve (15) aufweisenden Kontur hat, so dass der Hebelarm (7) durch das Führungsteil (14) auslenkbar ist, wenn das Führungsteil (14) gegen eine Begrenzung einer Montageöffnung (3) des Kraftstoffbehälters (2) gelangt.

2. Füllstandssensor nach Anspruch 1, **dadurch gekennzeichnet, dass** das Führungsteil (14) einen bogenförmigen, von dem Träger (5) weg weisenden Rand (16) hat.

3. Füllstandssensor nach Anspruch 1 oder 2, **dadurch gekennzeichnet, dass** der Träger (5) an seiner dem Führungsteil (14) des Hebelarms (7) abgewandten Seite einen Rand (17) mit einer glatten Kontur aufweist.

4. Füllstandssensor nach zumindest einem der vorhergehenden Ansprüche, **dadurch gekennzeichnet, dass** das Führungsteil (14) eine Rastverbindung an dem Hebelarm (7) hat.

5. Füllstandssensor nach zumindest einem der vorhergehenden Ansprüche, **dadurch gekennzeichnet, dass** das Führungsteil (14) einstückig mit dem Hebelarm (7) gefertigt ist.

6. Füllstandssensor nach zumindest einem der vorhergehenden Ansprüche, **dadurch gekennzeichnet, dass** der Hebelarm (7) einen an dem Träger (5) gelagerten Kunststoffbügel (9) und einen mit dem Kunststoffbügel (9) verbundenen, den Schwimmer (6) halternden Hebeldraht (10) aufweist und dass das Führungsteil (14) an dem Kunststoffbügel (9) angeordnet ist.

7. Füllstandssensor nach zumindest einem der vorhergehenden Ansprüche, **dadurch gekennzeichnet, dass** der Träger (5) oder ein mit dem Träger (5) fest verbundenes Bauteil im Wesentlichen die Breite einer Montageöffnung (3) des Kraftstoffbehälters (2) hat.

8. Füllstandssensor nach zumindest einem der vorhergehenden Ansprüche, **dadurch gekennzeichnet, dass** der Träger (5) an einem zum Verschluss einer Montageöffnung (3) des Kraftstoffbehälters (2) ausgebildeten Montageflansch (4) angeordnet ist.

## Claims

1. Filling level sensor for detecting a fuel filling level in a fuel tank of a motor vehicle, with a lever arm (7) which secures a float (6), follows the fuel filling level and has a support (5) provided for installation in the fuel tank, and with a mounting (8) of the lever arm on the support, **characterized in that** the lever arm (7) has a guide part (14) which protrudes laterally over the support (5) and has a contour having a guide curve (15) on its side facing away from the support (5), and therefore the lever arm (7) can be deflected by the guide part (14) when the guide part (14) arrives against a boundary of an installation opening (3) of the fuel tank (2).

2. Filling level sensor according to Claim 1, **characterized in that** the guide part (14) has a curved edge (16) pointing away from the support (5).

3. Filling level sensor according to Claim 1 or 2, **characterized in that** the support (5) has an edge (17) with a smooth contour on its side facing away from the guide part (14) of the lever arm (7).

4. Filling level sensor according to at least one of the preceding claims, **characterized in that** the guide part (14) has a latching connection on the lever arm (7).

5. Filling level sensor according to at least one of the preceding claims, **characterized in that** the guide part (14) is manufactured integrally with the lever arm (7).

6. Filling level sensor according to at least one of the preceding claims, **characterized in that** the lever arm (7) has a plastic clip (9) mounted on the support (5) and a lever wire (10) which is connected to the plastic clip (9) and secures the float (6), and **in that** the guide part (14) is arranged on the plastic clip (9).

7. Filling level sensor according to at least one of the preceding claims, **characterized in that** the support (5) or a component connected fixedly to the support (5) is essentially the width of an installation opening (3) in the fuel tank (2).

8. Filling level sensor according to at least one of the preceding claims, **characterized in that** the support (5) is arranged on an installation flange (4) designed for the closure of an installation opening (3) in the fuel tank (2).

## Revendications

1. Capteur de niveau destiné à détecter un niveau de carburant dans un réservoir de carburant d'un véhicule automobile avec un bras de levier (7) portant un flotteur (6) et suivant le niveau de carburant, avec un support (5) prévu pour le montage dans le réservoir de carburant et avec un appui (8) du bras de levier sur le support, **caractérisé en ce que** le bras de levier (7) comporte une partie de guidage (14) dépassant latéralement le support (5) avec un contour présentant une courbe de guidage (15) sur son côté placé à l'opposé du support (5), de telle manière que le bras de levier (7) puisse être écarté par la partie de guidage (14), lorsque la partie de guidage (14) arrive contre une limitation d'une ouverture de montage (3) du réservoir de carburant (2).

2. Capteur de niveau selon la revendication 1, **caractérisé en ce que** la partie de guidage (14) présente un bord en forme d'arc (16) orienté à l'opposé du support (5).

3. Capteur de niveau selon la revendication 1 ou 2, **caractérisé en ce que** le support (5) présente sur son côté placé à l'opposé de la partie de guidage (14) du bras de levier (7) un bord (17) portant un contour lisse.

4. Capteur de niveau selon au moins une des revendications précédentes, **caractérisé en ce que** la partie de guidage (14) comprend une liaison par encliquetage avec le bras de levier (7).

5. Capteur de niveau selon au moins une des revendications précédentes, **caractérisé en ce que** la partie de guidage (14) est fabriquée d'une seule pièce avec le bras de levier (7).

6. Capteur de niveau selon au moins une des revendications précédentes, **caractérisé en ce que** le bras de levier (7) présente un étrier en matière plastique (9) monté sur le support (5) et un fil de levier (10) relié à l'étrier en matière plastique (9) et retenant le flotteur (6) et **en ce que** la partie de guidage (14) est disposée sur l'étrier en matière plastique (9).

7. Capteur de niveau selon au moins une des revendications précédentes, **caractérisé en ce que** le support (5) ou un composant solidaire du support (5) a essentiellement la largeur d'une ouverture de montage (3) du réservoir de carburant (2).

8. Capteur de niveau selon au moins une des revendications précédentes, **caractérisé en ce que** le support (5) est disposé sur une bride de montage (4) configurée de façon à fermer une ouverture de montage (3) du réservoir de carburant (2).
